# EUROPEAN PATENT APPLICATION

(11) **EP 1 388 434 A2**
(43) Date of publication of application: **11.02.2004**
(21) Application number: 03394071.9
(22) Date of filing: 06.08.2003
(51) Int. Cl.: B60B 29/00

(54) **Wheel lifting device**

(30) Priority: 09.08.2002 IE 20020671
(71) Applicant: Grace, Mark, Kilmacthomas, Co. Waterford (IE); Trew, Ruth, Kilmacthomas, Co. Waterford (IE)
(72) Inventor: Grace, Mark, Kilmacthomas Co. Waterford (IE)
(74) Representative: Wingfield, Anne

(57) **Abstract**

A wheel lifting device (1, 10, 20) for manually lifting a wheel of a vehicle, such as a truck, comprises a footplate arrangement (1, 22), a lever member (10, 32) and means (14, 24) for releasably engaging the lifting device with the wheel. The footplate arrangement comprises a plate (2, 22) adapted to be located against a front or rear surface of the wheel in use. The lever member comprises a bar (12, 32) having a longitudinal axis extending substantially perpendicular to the plate. The device may be used to lift a wheel from a horizontal orientation to a vertical orientation.

## Description

The present invention relates to a wheel lifting device and, in particular, to a tool for manually lifting a wheel of a vehicle such as a truck.

Large wheels, such as those of a truck, are difficult and cumbersome to raise manually from a horizontal position to a vertical position, for example for installing on the axle of a vehicle. The present invention has been made from a consideration of such difficulties and in order to provide a device for lifting a wheel in the form of a simple tool which is easy and convenient to use.

According to the invention there is provided a wheel lifting device comprising a footplate arrangement, a lever member and means for releasably engaging the lifting device with the wheel, the footplate arrangement comprising a plate adapted to be located against a front or rear surface of the wheel in use and the lever member comprising a bar having a longitudinal axis extending substantially perpendicular to the plate.

Preferably, the plate is in the shape of a sector having two radial edges and a circumferential edge. Preferably, the means for releasably engaging the lifting device with the wheel comprises an engagement sphere located at one end of the bar.

In an alternative embodiment, the plate is preferably substantially in the shape of a semicircle with two peripheral substantially semicircular indentations and a central substantially semicircular projection along the diametrical edge thereof. In this case, the two indentations on the diametrical edge of the plate may comprise the means for releasably engaging the lifting device with the wheel.

Preferably, the plate comprises a rubber flange extending along an outer edge thereof. Preferably, the flange comprises neoprene. Preferably, the flange is secured along the circumferential edge of the plate.

Preferably, the footplate arrangement comprises a cylindrical sleeve, a lower end of the sleeve being connected adjacent an edge of the plate. Preferably, the longitudinal axis of the sleeve is substantially perpendicular to the plate.

Preferably, the lever member is removably locatable through the sleeve and is releasably lockable relative to the sleeve. Preferably, a locking bolt is positioned on the sleeve to extend through an aperture thereof and is adjustable to lock the lever member relative to the sleeve.

Preferably, the lever member comprises two or more telescopic tubular members and a handle portion.

The invention will now be described further, by way of example only, with reference to the accompanying drawings, in which:
Fig. 1 is a front view of a footplate arrangement of a wheel lifting device according to a first embodiment of the invention;
Fig. 2 is a side view of the footplate arrangement of figure 1;
Fig. 3 is a view of a lever member of the wheel lifting device according to the first embodiment of the invention passing through the sleeve of the footplate arrangement of figure 1;
Fig. 4 is a front view of a wheel lifting device according to a second embodiment of the invention;
Fig. 5 is a side view of the wheel lifting device of figure 4; and
Fig. 6 is a view of a telescopic handle arrangement for the lever member of figure 3 or the wheel lifting device of figure 4.

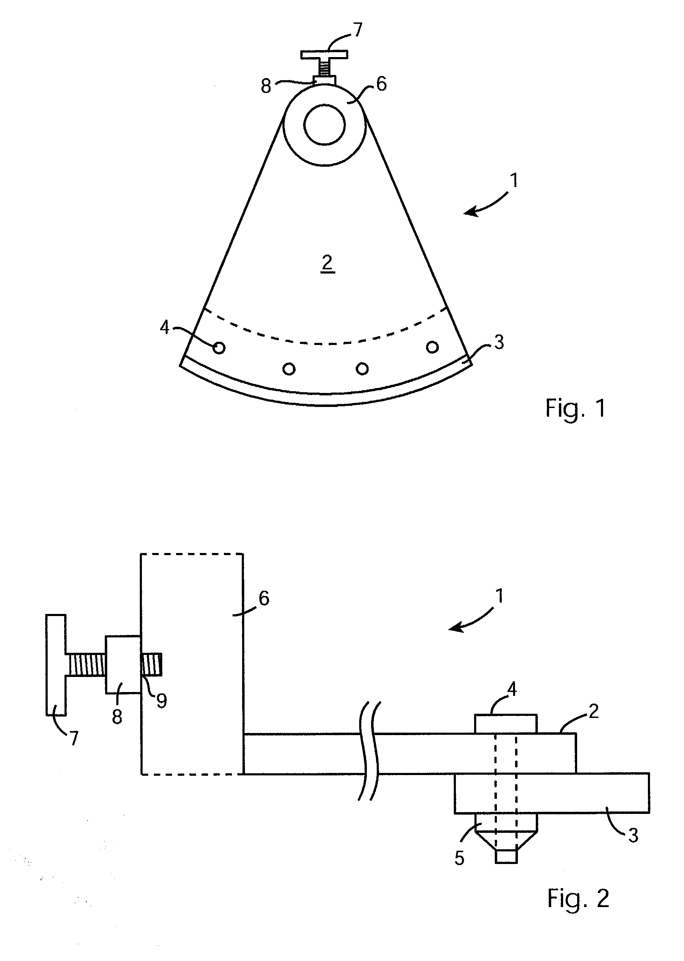

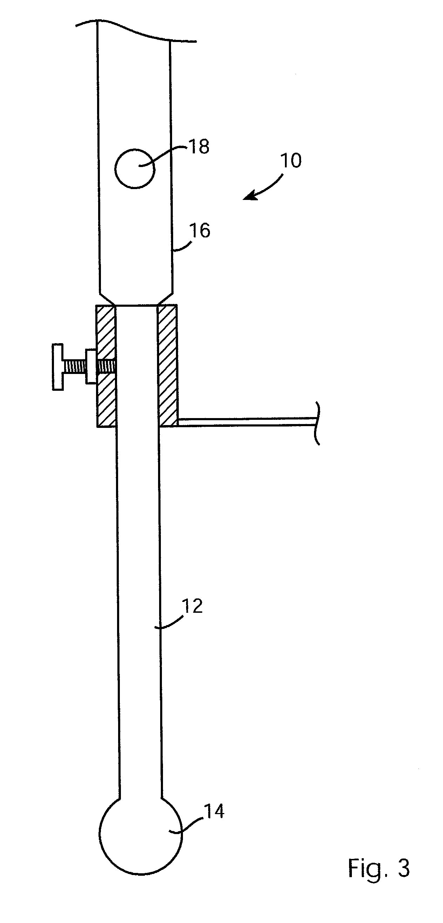

A wheel lifting device according to a first embodiment of the invention comprises a footplate arrangement 1 as shown in figures 1 and 2 and a lever member 10 as shown in figure 3.

Referring to figures 1 and 2, the footplate arrangement 1 comprises a plate 2, typically in the shape of a sector, having a rubber flange 3 extending along an outer edge thereof. Typically, the flange 3 comprises neoprene and is secured along the circumferential edge of the plate 2 by suitable means, such as a series of bolts 4 and nuts 5, extending through the flange and the plate.

A cylindrical sleeve 6 is connected adjacent a lower end thereof to the inner edge of the plate 2. The longitudinal axis of the cylindrical sleeve 6 is substantially perpendicular to the plate 2. The cylindrical sleeve 6 is adapted to receive the lever member 10 therethrough, as described hereinbelow.

A locking bolt 7 and nut 8 are positioned on the sleeve 6. The bolt 7 extends through an aperture 9 of the sleeve and may be adjusted to lock the lever member 10 in position relative to the sleeve 6.

Referring to figure 3, the lever member 10 comprises a solid bar 12 having an engagement sphere 14 located at one end thereof. The other end of the bar 12 is connected or welded to a tubular member 16 having a quick release pin 18 extending through the side thereof.

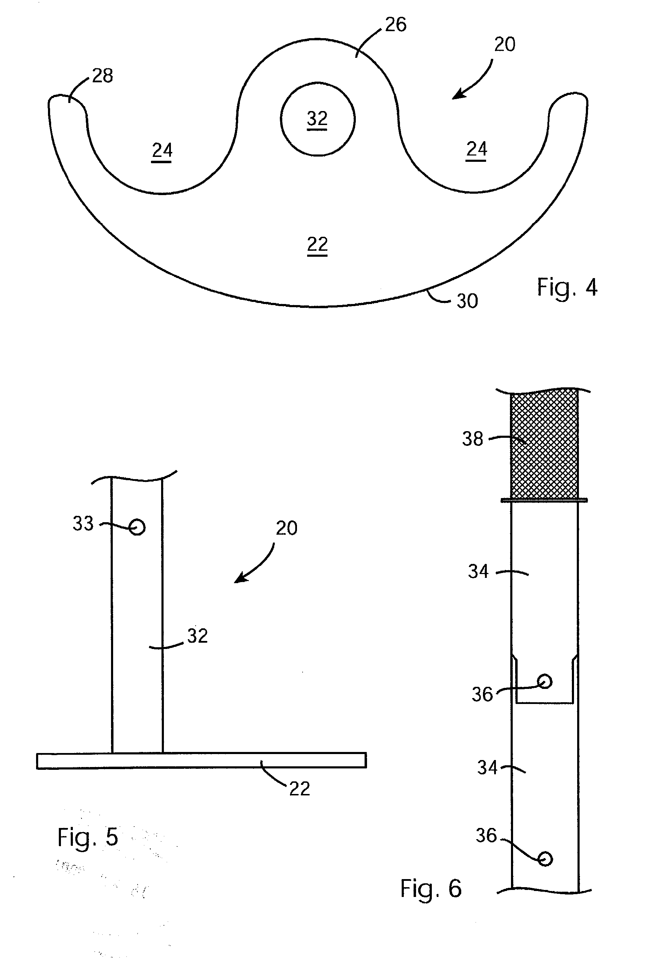

Referring to figures 4 and 5, a wheel lifting device 20 according to a second embodiment of the invention comprises a plate 22. The plate 22 is substantially in the shape of a semicircle with two peripheral substantially semicircular indentations 24 and a central substantially semicircular projection 26 along the diametrical edge 28 thereof.

The plate 22 may have a rubber flange secured to the outer circumferential edge 30 thereof as described with reference to the first embodiment. The lifting device 20 further comprises a solid bar 32 extending substantially perpendicularly to the plate 22. The bar 32 acts as a lever in use. The bar 32 comprises an aperture 33 adapted to receive a quick release pin 36 referred to with reference to figure 6.

Referring to figure 6, the lever member 10 of the first embodiment or the bar 32 of the second embodiment may comprise two or more telescopic tubular members 34 with quick release pins 36 engaging between adjacent telescopic members to allow the length of the lever to be adjusted conveniently as required. A handle portion 38, typically rubber coated, is provided at the free end of the lever to improve grip during use.

Referring to the first embodiment of the invention, in use, the lever member 10 is located through the sleeve 6 by inserting the sphere end through the upper end of the sleeve. The engagement sphere 14 is then engaged in an aperture on the wheel hub and the sleeve is slid down the bar 12 until the plate 2 abuts the front or rear surface of the wheel.

At this stage, the locking bolt 7 is tightened against the bar 12 to hold the bar longitudinally relative to the sleeve at the desired position. The handle and telescopic tubular members are adjusted to give the required length of lever and the lever member is levered manually to lift the wheel from a horizontal position to a vertical position.

Thus, the device of the first embodiment is useful for lifting a wheel from a horizontal orientation to a vertical orientation. The rubber or neoprene flange 3 prevents paint scratches or scratching of the aluminium wheel during use.

Referring to the second embodiment of the invention, in use, the plate 22 is located to abut the front or rear surface of the wheel so that the two indentations 24 on the diametrical edge of the plate 22 are engaged with bolt projections on the wheel hub.

The handle and telescopic tubular members are adjusted to give the required length of lever and the lever member is levered manually to lift the wheel from a horizontal position to a vertical position.

Thus, the device of the second embodiment is useful for lifting a complete wheel unit, including hub, brake drum and the like, from a horizontal orientation to a vertical orientation.

Typically, the lifting device of the invention is dimensioned to suit the size of wheel to be lifted. The following dimensions were found to be suitable for a standard truck wheel: sleeve 6 diameter 20mm, sleeve 6 length 20mm, flange 3 thickness 6mm, flange 3 width 40mm, footplate 2 thickness 6mm, flange 3 overhang beyond edge of footplate 2 8mm, locking bolt 7 diameter 8mm, bolts 4 diameter 8mm, radial distance from centre of sleeve 6 to outermost edge of flange 3 variable, depending on wheel size, quick release pins 18, 36 diameter 5mm, tubular member 16 diameter 25mm, tubular member 16 length 140mm, solid bar 12 length 200mm, solid bar 12 diameter 19mm, engagement sphere 14 diameter 20mm, extended length of tubular members 16, 34 and handle 38 1500mm, solid bar 32 length 220mm, solid bar 32 diameter 19mm, aperture 33 diameter 5mm, plate 22 thickness 8mm, plate 22 diameter 166mm, plate 22 width 65mm, distance horizontally from centre of solid bar 32 to inner edge of semicircular indentations 24 36.5mm, horizontal radius of semicircular indentations 24 16mm, distance horizontally from outer edge of semicircular indentations 24 to outside edge of plate 14.5mm and distance vertically from centre of solid bar 32 to outer edge of semicircular indentations 24 19mm.

It will be appreciated that the present invention is not intended to be restricted to the details of the above embodiments, which are described by way of example only.

## Claims

1. A wheel lifting device (1, 10, 20) comprising a footplate arrangement (1, 22), a lever member (10, 32) and means (14, 24) for releasably engaging the lifting device with a wheel, the footplate arrangement comprising a plate (2, 22) adapted to be located against a front or rear surface of the wheel in use and the lever member comprising a bar (12, 32) having a longitudinal axis extending substantially perpendicular to the plate.

2. A wheel lifting device according to claim 1 wherein the plate (2) is in the shape of a sector having two radial edges and a circumferential edge.

3. A wheel lifting device according to any preceding claim wherein the means for releasably engaging the lifting device with the wheel comprises an engagement sphere (14) located at one end of the bar (12).

4. A wheel lifting device according to claim 1 wherein the plate (22) is substantially in the shape of a semicircle with two peripheral substantially semicircular indentations (24) and a central substantially semicircular projection (26) along the diametrical edge (28) thereof.

5. A wheel lifting device according to claim 4 wherein the two indentations (24) on the diametrical edge of the plate comprise the means for releasably engaging the lifting device with the wheel.

6. A wheel lifting device according to any preceding claim wherein the plate comprises a rubber flange (3), typically neoprene, extending along an outer edge thereof.

7. A wheel lifting device according to any preceding claim wherein the footplate arrangement comprises a cylindrical sleeve (6), a lower end of the sleeve being connected adjacent an edge of the plate, the longitudinal axis of the sleeve being substantially perpendicular to the plate.

8. A wheel lifting device according to claim 7 wherein the lever member is removably locatable through the sleeve and is releasably lockable relative to the sleeve.

9. A wheel lifting device according to claim 8 wherein a locking bolt (7) is positioned on the sleeve to extend through an aperture (9) thereof and is adjustable to lock the lever member relative to the sleeve.

10. A wheel lifting device according to any preceding claim wherein the lever member comprises two or more telescopic tubular members (16, 34) and a handle portion (38).
